# EUROPÄISCHE PATENTSCHRIFT

(11) **EP 0 938 851 B1**
(45) Veröffentlichungstag und Bekanntmachung des Hinweises auf die Patenterteilung: **16.10.2002**
(21) Anmeldenummer: 99102101.5
(22) Anmeldetag: 02.02.1999
(51) Int. Cl.: A23L 2/56, A23L 2/64, A23L 1/235

(54) **Getränke und Verfahren zu ihrer Herstellung**
Beverage and process for preparing it
Boisson et procédé pour la préparer

(30) Priorität: 26.02.1998 DE 19808120
(43) Veröffentlichungstag der Anmeldung: 01.09.1999
(73) Patentinhaber: Eckes-Granini GmbH & Co. Kommanditgesellschaft, D-55268 Nieder-Olm (DE)
(72) Erfinder: Dechent, Hans-Mario, 55291 Saulheim (DE); Popken, Anne M., Dr., 55296 Harxheim (DE); Simson, Ingrid, 55122 Mainz (DE)
(74) Vertreter: Lederer, Franz, Dr.

(56) Entgegenhaltungen:
- EP-A- 0 292 048
- EP-A- 0 357 130

## Beschreibung

Die vorliegende Erfindung betrifft einen rekonstituierten Orangensaft mit erhöhter Lagerstabilität, ein Verfahren zu seiner Herstellung und orangensafthaltige Getränke enthaltend einen erfindungsgemäßen Orangensaft.

Fruchtsäfte und fruchtsafthaltige Getränke erfreuen sich beim Verbraucher einer seit Jahren wachsenden Beliebtheit, wobei Orangensäfte weltweit zu den beliebtesten Fruchtsäften zählen. Mit ca. 24 % des Pro-Kopf-Verbrauchs von über 40 1 spielen sie in Deutschland nach Apfelsaft die größte Rolle.

Dieses Verbraucherverhalten wird maßgeblich bestimmt durch ein gesteigertes Gesundheits- und Fitneßbewußtsein und der Erwartung, daß Fruchtgetränke nicht nur einen wichtigen Beitrag zu einer modernen und gesunden Ernährung leisten sondern auch die subjektiven Bedürfnisse nach Wohlgeschmack und Genuß befriedigen.

Orangensäfte werden vom Verbraucher dann als wohlschmeckend empfunden, wenn sie ein harmonisch-fruchtiges Aromaprofil und ein ausgewogenes Zucker-Säure-Verhältnis aufweisen. Ein weiterer wichtiger Aspekt stellt der hohe Gehalt an natürlichem Vitamin C dar.

Der überwiegende Anteil an Orangensaft wird in den Anbauländern, insbesondere in Brasilien und den USA, zur Reduktion des Volumens einem Konzentrierprozeß unterzogen. Durch kontinuierliche Verfahrensoptimierungen ermöglichen moderne, mit neuen Temperaturund Zeitprofilen ausgestattete Anlagen des heutigen Standards, die Gewinnung von Konzentratqualitäten, aus denen nach Rekonstitution, d.h. nach Zugabe des bei der Konzentrierung entzogenen Wassers und der flüchtigen Aromastoffe, Orangensäfte erhalten werden, die Frischsäften verblüffend ähnlich sind (Löffler: Flüssiges Obst, 695-701, 1996). Die bei der Konzentrierung abgetrennten flüchtigen Aromastoffe werden wegen ihres Lösungsverhaltens als Wasserphase (wasserlösliche Komponenten) und als Ölphase (wasserunlösliche Komponenten) bezeichnet. Die beiden Phasen werden separat aufgearbeitet und bei der Rekonstitution des Orangensaftes aus konzentriertem Orangensaft wieder hinzugefügt (Crandall: Verarbeitung von Citrusfrüchten. In: Schobinger (Hrsg.): Handbuch der Lebensmitteltechnologie, Frucht- und Gemüsesäfte, Ulmer, 1987, 202 - 226).

Orangensäfte und orangensafthaltige Getränke unterliegen jedoch nicht nur während der Herstellung sondern vor allem während der Lagerung beträchtlichen sensorischen Veränderungen, die - abhängig von der Lagertemperatur und der Lagerdauer - eine erhebliche Genußminderung darstellen können.

Seit vielen Jahren wird daher an der Aufklärung und Bewertung der Orangensaftaromakomponenten gearbeitet. In einer Vielzahl von Untersuchungen über Inhaltsstoffe der flüchtigen Fraktionen von Orangen, Orangensäften sowie Orangenöl wurden in den vergangenen beiden Jahrzehnten mehr als 200 flüchtige Komponenten identifiziert (P. Schreier et al.: Chem. Mikrobiol. Technol. Lebensm., 6, 71-77, 1979). Insbesondere das Aroma von frischem Saft wird als relativ instabil beschrieben (Shaw et al.: J. Agric. Food Chem. 27, 246-257, 1979), Rouseff et al.: Elsevier Science Publ. B.V., Amsterdam, 211-227, 1992, Nagy et al.: American Chemical Society, Washington, DC 331-344, 1989).

In zahlreichen Veröffentlichungen wird über die für die Veränderungen verantwortlichen Faktoren berichtet und es werden Maßnahmen zur Aromaerhaltung vorgeschlagen. Als wesentlicher Aromafehler bei der Orangensaftherstellung wird der sogenannte "heated off-flavour" (HOF) angesehen, für den thermische Veränderungen im Zuge der Maillard-Reaktion verantwortlich gemacht werden (Rouseff et al.: Off-flavors in Food Beverages, Elsevier Science Publishers B.V., Amsterdam 1992, 211-227). Moshonas et al. berichten, daß bestimmte Aromakomponenten von Orangensaft, insbesondere Aldehyde bei der Lagerung abnehmen und auch die positiven Aromakomponenten von Orangensaft durch Bildung sogenannter off-flavour Komponenten negativen Veränderungen unterliegen, was zu einer merklichen Qualitätsminderung der Produkte bei der Lagerung führt (J. Agric. Food Chem. 1989, 157-161; J. Food Science 1989, 82- 85).

Es ist bekannt, daß über den Einsatz höherer Mengen bestimmter aromaaktiver Komponenten der Frischsaftcharakter von frisch hergestelltem Orangensaft verbessert werden kann. Weiterhin sind Verfahren bekannt, die bei der Konzentrierung abgetrennten flüchtigen Aromastoffe, die sogenannte Wasserphase und Ölphase ebenso wie das bei der Saftpressung anfallende Schalenöl, zu konzentrieren, durch Fraktionierung erwünschte Komponenten anzureichern oder in einzelne Komponenten aufzutrennen.

Die EP 0 198 591 beschreibt Zitrussaftkonzentrate und Zitrussaftgetränke mit frischem Geschmack und größerer Lagerstabilität, die einen Gehalt von 0,001 bis 0,010 % d-Limonen und ein Verhältnis von leichtflüchtigen zu schwerflüchtigen Aromakomponenten größer als 30:1 aufweisen. Die Erfindung soll insbesondere auf gefrorene Konzentrate anwendbar sein.

Die EP 0 292 047 beschreibt kommerziell hergestellte Orangensaftprodukte, die einen stärkeren handgepreßten Charakter aufweisen, der dadurch erzielt wird, daß die Produkte einen Gehalt von höchstens 0,015 % an titrierbarem Öl sowie definierte Gehalte an Ethanol, Acetaldehyd, Methanol, Ethylbutanoat, Ethyl-3-hydroxyhexanoat und Valencen besitzen und ein Verhältnis von der kombinierten Menge des Acetaldehyds, Ethylbutanoats, Ethyl-3-hydroxyhexanoats und Valencens zu der kombinierten Menge des Hexanals, α-Pinens, Myrcens, Decanals, Linalools, Octanols, 4-α-Terpineols, α-Terpineols, Dodecanals und Nootkatons von wenigstens 2:1 aufweisen. Die beschriebene Aromazusammensetzung und das Verhältnis der in größerer Menge enthaltenen sogenannten erwünschten zu den weniger erwünschten Komponenten entspricht dem bereits von Moshonas et al. beschriebenen Aromaprofil frischer Orangensäfte (Food Techn., 100-103, 1986). Derartige Produkte besitzen zwar ein verbessertes Aroma, das jedoch nach eigenen Versuchen der Erfinder bei der Lagerung bei 20°C nur wenige Wochen anhält. Danach sind keine Vorteile gegenüber herkömmlichen aus konzentriertem Orangensaft hergestellten Orangensäften festzustellen.

Die EP 0 292 048 beschreibt ein Verfahren zur Herstellung eines kommerziellen Beschickungssaftes aus Orangenfrüchten, das in der Verbesserung von Verfahrensschritten, u.a. bei der Extraktion und der Aromarückgewinnung, besteht.

Die EP 0357130 beschreibt ein Verfahren zur Herstellung eines lagerfähigen orangensafthaltigen Getränks, das in der Zugabe von Öl- und Essenzen-, Geschmacksstoff- und Aromakomponenten zu einer Konzentratquelle, einer Sterilisierungsstufe und einer Abfüllstufe besteht. Das nach diesem Verfahren hergestellte Produkt weist einen Gehalt an Orangenöl von weniger als 0,015 % und ein Verhältnis von der kombinierten Menge an Acetaldehyd, Ethylbutanoat, Ethyl-3-hydroxyhexanoat und Valencen zu der kombinierten Menge von α-Pinen, Myrcen, Linalool, 4-Terpineol, α-Terpineol und Nootkaton von wenigstens 1,2:1 auf. Die Schrift enthält keine Angaben über die Stabilität der auf diese Weise hergestellten Getränke, wenn sie unter Normalbedingungen, d.h. ohne Kühlung über einen für derartige Produkte üblichen Zeitraum von mehreren Monaten, gelagert werden.

Die EP 613 622 beschreibt ein nichtalkoholisches, 20 - 100 % Pflanzensaft enthaltendes Getränk mit einem verminderten Gehalt an sensorisch Fehltöne verursachenden Verbindungen und hierdurch verbesserter Lagerstabilität, das nach einer Lagerung von 12 Monaten bei 20°C einen Gehalt von 1,2 mg/l an freien Hydroxyzimtsäuren und 0,2 mg/l an einfachen Vinylphenolen, berechnet als Vinylguajakol, nicht überschreitet.

Nach dem Stand der Technik sind bisher jedoch noch keine auf physikalischem Weg haltbar gemachte orangensafthaltige Getränke bekannt, deren Aromaprofil dem frisch hergestellter Getränke weitgehend nahekommt und die eine erhöhte Stabilität besitzen, so daß sie ohne signifikanten Qualitätsverlust über einen längeren Zeitraum bei Normalbedingungen gelagert werden können.

Aufgabe der vorliegenden Erfindung ist daher die Bereitstellung von Orangensaft und orangensafthaltigen Getränken mit frischem Aromaprofil, die gegenüber herkömmlichen Produkten bei der Lagerung bei Raumtemperatur (ca. 20°C) eine verbesserte Lagerstabilität aufweisen, welche bei herkömmlichen Produkten nur durch eine kostenintensivere Kühllagerung bei Temperaturen unter 10°C erreicht werden kann.

Erfindungsgemäß wurde überraschend gefunden, daß Getränke, die vorzugsweise durch Rekonstitution aus konzentriertem Orangensaft mit einem geringen bis höchstens 0,005 %vol Gehalt an etherischem Öl (bezogen auf den nicht konzentrierten, nur mit Wasser versetzten Saft) und Mischungen aus konzentriertem und nicht konzentriertem etherischen Öl sowie Mischungen aus konzentrierter und nicht konzentrierter Wasserphase hergestellt werden, gegenüber herkömmlichen Getränken dann einen stärkeren Frischsaftcharakter und eine verbesserte Lagerstabilität aufweisen, wenn der Aromaverdünnungsfaktor (FD) der aromaaktiven Komponenten Ethylisobutanoat, α-Pinen, Ethylbutanoat, Ethyl-2-methylbutanoat, Hexanal, Myrcen, Octanal, 2-Isopropyl-3-methoxy-pyrazin, Isomere der 2- und 3-Methylbuttersäure und Vanillin im Vergleich zu frisch gepreßtem Orangensaft erhöht ist und der Aromaverdünnungsfaktor (FD) der aromaaktiven Komponenten Nonanal, Methional, E,E-2,4-Decadienal, β-Ionon, Weinlacton, Ethylpropionat, 1-Penten-3-on, 2-/3-Methylbutanol, Ethyl-3-hydroxyhexanoat, 4,5-Epoxy-E-2-decenal und Furaneol etwa gleich hoch oder niedriger ist als in frisch gepreßtem Orangensaft.

Es war insbesondere nicht zu erwarten, daß auch Komponenten, die einen für Orangensaft untypischen oder eher negativen Aromaeindruck vermitteln, offensichtlich zum positiven Aromaprofil und der verbesserten Lagerstabilität beitragen. Dies trifft z.B. auf 2-Isopropyl-3-methoxy-pyrazin, die Isomere der 2- und 3-Methylbuttersäure, oder Hexanal zu. Die sensorischen Aromaqualitäten dieser Komponenten lassen sich z.B. wie folgt beschreiben:

| Komponente | Aromaqualität |
|---|---|
| 2-Isopropyl-3-methoxy-pyrazin | grün, fettig |
| Isomere der 2- und 3-Methylbuttersäure | Schweiß |
| Hexanal | Gras |

Typische Aromaverdünnungsfaktoren wesentlicher aromaaktiver Komponenten in frischem und einem erfindungsgemäßen Orangensaft sind aus der nachstehenden Tabelle ersichtlich:

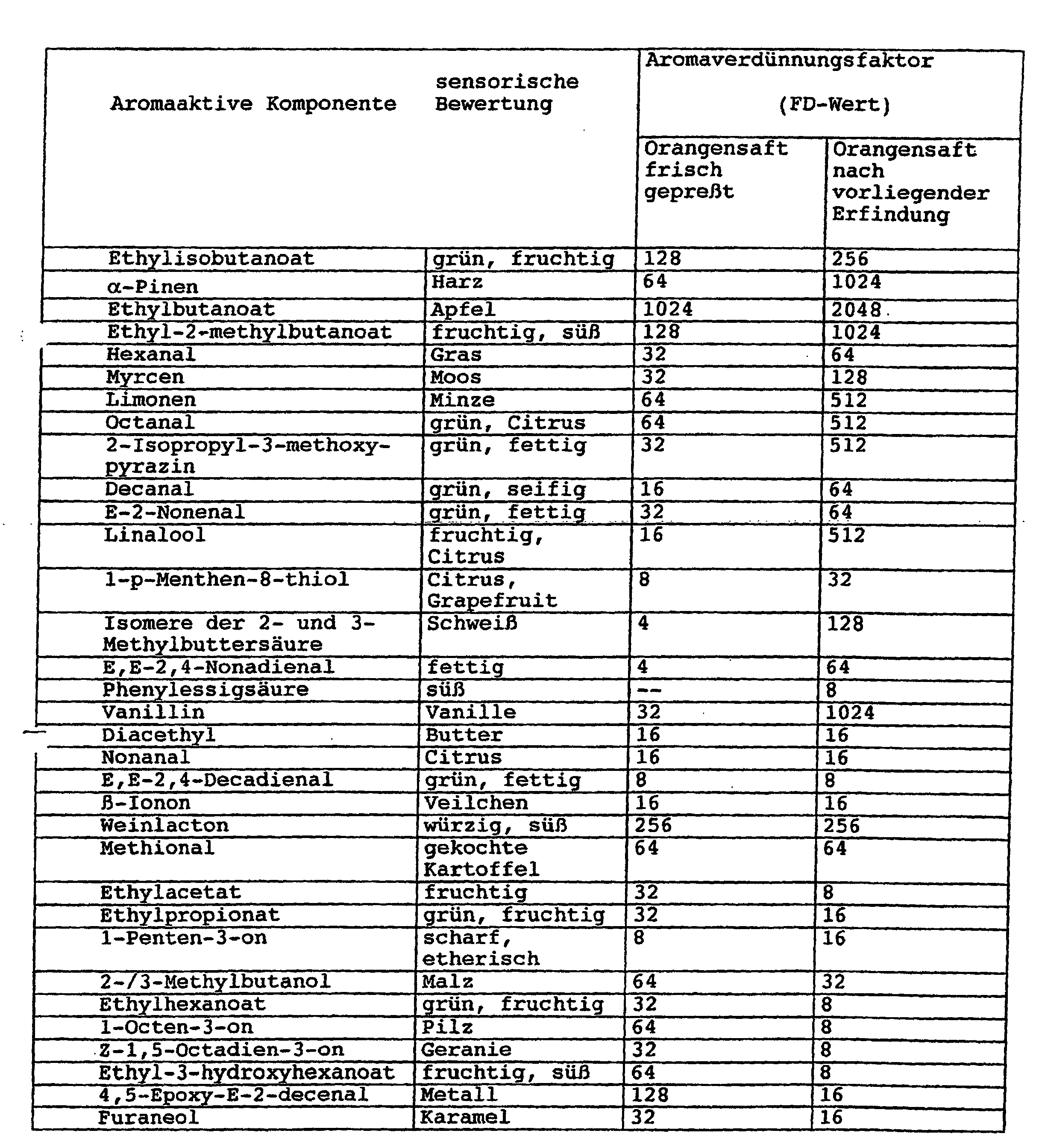

Gegenstand der Erfindung ist somit ein Verfahren zur Herstellung von Orangensaft durch Rekonstitution aus konzentriertem Orangensaft unter Zugabe von Wasserphase und etherischem Öl, wobei die Mengen an Wasserphase und etherischem Öl, das Verhältnis von konzentrierter zu nicht-konzentrierter Wasserphase und das Verhältnis von konzentriertem zu nicht-konzentriertem etherischen Öl so eingestellt werden, daß der Aromaverdünnungsfaktor (FD) der aromaaktiven Komponenten Ethylisobutanoat, α-Pinen, Ethylbutanoat, Ethyl-2-methylbutanoat, Hexanal, Myrcen, Octanal, 2-Isopropyl-3-methoxy-pyrazin, den Isomeren der 2- und der 3-Methylbuttersäure und Vanillin im Vergleich zu frisch gepreßtem Orangensaft erhöht ist und der Aromaverdünnungsfaktor (FD) der aromaaktiven Komponenten Nonanal, Methional, E,E-2,4-Decadienal, β-Ionon, Weinlacton, Ethylpropionat, 1-Penten-3-on, 2-/3-Methylbutanol, Ethyl-3-hydroxyhexanoat, 4,5-Epoxy-E-2-decenal und Furaneol etwa gleich hoch oder niedriger ist als in frisch gepreßtem Orangensaft. Vorzugsweise wird ein konzentrierter Orangensaft mit einem Gehalt an etherischem Öl von nicht über 0,005 %vol (bezogen auf den auf Trinkstärke verdünnten Saft vor Zugabe der Wasserphasen- und etherischen Öl-Mischungen) eingesetzt.

Im Sinne der vorliegenden Erfindung ist als Gehalt an freiem etherischem Öl die Summe aus Ölphase und Schalenöl zu verstehen, wobei bevorzugt die Ölphase allein ohne Schalenöl eingesetzt wird.

Aromaaktive Komponenten im Sinne der vorliegenden Erfindung sind die als Schlüsselaromastoffe identifizierten geruchsaktiven freien Aromastoffe, die einen FD-Wert von wenigstens 4, vorzugsweise von wenigstens 8, aufweisen. Sie werden anhand einer Aromaextraktionsverdünnungsanalyse (AEDA) verknüpft mit einer Kapillar-Gaschromatographie- (HRGC)- und Massenspektrometrie (MS)-Analyse durch sogenannte "FD-Faktoren", d.h. Aromaverdünnungsfaktoren, ermittelt und charakterisiert. Zur Ermittlung der FD-Faktoren wird die Aromafraktion des erfindungsgemäßen Getränkes stufenweise mit einem geeigneten Lösungsmittel verdünnt und diese Verdünnungen werden parallel zur Erstellung des Flammen-Ionisations-Detektor-(FID)-Signals geruchlich in qualitativer und in quantitativer Hinsicht beurteilt. Die Quantifizierung der Schlüsselaromastoffe erfolgt durch Isotopen-Verdünnungsanalyse. Mittels Bestimmung der Geruchsschwellenwerte anhand von Referenzaromastoffen durch ein Sensorikpanel wird der Aromawert als das Verhältnis der Konzentration eines Aromastoffes zu seinem Geruchsschwellenwert berechnet (QOAV).

Überraschend wurde gefunden, daß einzelne oder mehrere Aromastoffe in einer Menge des 0,1 bis 20fachen ihrer frei vorkommenden Menge in gebundener Form vorliegen. Das Vorliegen von gebundenen Aromastoffen ist für zahlreiche Säfte aus Früchten, nicht aber für Orangensaft, bekannt. Unter gebundenen Aromastoffen sind Aromastoffe zu verstehen, die im frischen Getränk noch nicht geruchlich und geschmacklich wahrnehmbar sind und erst bei der Haltbarmachung und Lagerung, z.B. über die im Getränk enthaltenen Fruchtsäuren freigesetzt werden und zum Erhalt eines frischen Aromaprofils bei der Lagerung beitragen. Sie werden analytisch erfaßt, indem das Getränk auf einen pH-Wert vorzugsweise zwischen 4 und 5 gepuffert wird und anschließend einer Simultanen Destillation-Extraktion (SDE) unterzogen wird. Der Anteil an glykosidisch gebundenen Aromakomponenten ergibt sich rechnerisch durch Subtraktion des Gehaltes an freien Aromastoffen.

Erfindungsgemäße Getränke enthalten 0,025 bis 1,0 %vol, vorzugsweise 0,05 bis 0,6 %vol freie Wasserphase, wobei mindestens 5 % und höchstens 95 % der Wasserphase in konzentrierter Form zugesetzt werden. Vorzugsweise werden mindestens 30 % der Wasserphase in konzentrierter Form zugesetzt. Neben ihrem Gehalt an freier Wasserphase weisen erfindungsgemäße Getränke auch einen Gehalt an gebundener Wasserphase auf, der das 0,1-10fache der Menge an freier Wasserphase beträgt.

Der Gehalt an freiem etherischen Öl beträgt 0,0025 - 0,050 %vol, vorzugsweise 0,01 - 0,025 %vol und insbesondere 0,012-0,018 %vol. Das 0,1-20fache dieser Menge liegt darüber hinaus in gebundener Form vor.

Vorzugsweise wird Ölphase eingesetzt, es können jedoch auch Mischungen aus Ölphase und Schalenöl verwendet werden.

Ein Teil des etherischen Öls wird in konzentrierter Form zugesetzt, wobei dieser Anteil bezogen auf den Gesamtzusatz an etherischem Öl wenigstens 10 %, vorzugsweise wenigstens 20 % und insbesondere wenigstens 30 % des Ölgehalts beträgt.

Die den erfindungsgemäßen Getränken in konzentrierter Form zugesetzten etherischen Öle weisen vorzugsweise einen Gehalt an Polymethoxyflavonen mit hoher antioxidativer Wirkung auf, wobei der Anteil an Tangeritin und Nobiletin bezogen auf den Gesamtgehalt an Polymethoxyflavonen zusammen mindestens 10 % vorzugsweise mindestens 20 % beträgt.

Der als freies etherisches Öl und freie Wasserphase vorliegende Anteil kann durch schonendes Ausdampfen im Vakuum abgetrennt und analytisch erfaßt werden. Unter gebundenem etherischem Öl und gebundener Wasserphase ist der Teil des etherischen Öls und der Wasserphase zu verstehen, der in glykosidisch gebundener Form vorliegt und deshalb bei schonendem Ausdampfen im Getränk zurückbleibt und auf diese Weise bestimmt werden kann.

Ein Orangensaft gemäß vorliegender Erfindung ist dadurch **gekennzeichnet, daß**
a) der Gehalt an freien Aldehyden und Alkoholen mit einer Kettenlänge von 6 Kohlenstoffatomen 0,1-10 mg/l, vorzugsweise 0,4-4 mg/l,
b) der Gehalt an freien kurzkettigen Aldehyden mit einer Kettenlänge von 2 bis 5 Kohlenstoffatomen 1-50 mg/l, vorzugsweise 2-20 mg/l,
c) der Gehalt an freien Estern mit einer Kettenlänge von 6-10 Kohlenstoffatomen im organischen Säurerest 0,05-5 mg/l, vorzugsweise 0,3-3 mg/l,
d) der Gehalt an freien Estern mit einer Kettenlänge von 2 bis 5 Kohlenstoffatomen im organischen Säurerest 0,2-10 mg/l, vorzugsweise 1-5 mg/l,
e) der Gehalt an freien Estern mit einer Kettenkänge von 2-10 Kohlenstoffatomen im organischen Säurerest dividiert durch den Gehalt an freien Aldehyden und Alkoholen mit einer Kettenlänge von 6 Kohlenstoffatomen 1:1 bis 10:1, vorzugsweise 2:1 bis 6:1,
f) der Gehalt an Norisoprenoiden 0,001-1 mg/l,
g) der Gehalt an flüchtigen Schwefelverbindungen 0,001-5 mg/l,
h) der Gehalt an Valencen maximal 20 mg/l, vorzugsweise maximal 4 mg/l und
i) das Gewichtsverhältnis der Menge an Valencen zur Menge an Nootkaton 1:1 bis 30:1 beträgt.

Der Gehalt an freien Aromakomponenten setzt sich zusammen aus der Summe der aromaaktiven Komponenten im Sinne der vorliegenden Erfindung und der übrigen, in freier Form vorliegenden flüchtigen Verbindungen, die zum Aromaprofil beitragen.

Zur Gruppe der Aldehyde und Alkohole mit einer Kettenlänge von 6 Kohlenstoffatomen zählen insbesondere Hexanal, 2-Hexenal, 2-Hexenol und 3-Hexenol, die Gruppe der kurzkettigen Aldehyde mit einer Kettenlänge von 2 bis 5 Kohlenstoffatome umfaßt insbesondere Ethanal, Butenal, Pentenal und Butanal, die Ester mit einer Kettenlänge von 6-10 Kohlenstoffatomen im organischen Säurerest umfassen alle aliphatischen, auch im Säurerest hydroxylierten oder verzweigten Ester, u.a. Ethylhexanoat, Ethyloctanoat, Ethyldecanoat, Ethyl-hydroxyhexanoat, Ethyl-hydroxyoctanoat sowie entsprechende Methylester.

Bei den Estern mit einer Kettenlänge von 2 bis 5 Kohlenstoffatomen im organischen Säurerest sind insbesondere Ethylacetat, Ethylbutanoat sowie entsprechende Methylester gemeint. Unter dem Gehalt an Norisoprenoiden ist die Summe aller als Norisoprenoide aufzufassenden Verbindungen zu verstehen, zu denen unter anderem α-Ionon und β-Ionon gehören. Unter dem Gehalt an Schwefelverbindungen ist die Summe aller flüchtigen anorganischen und organischen Schwefelverbindungen zu verstehen, hierzu gehören v.a. Methylsulfid, Dimethylsulfid sowie Terpenthiole.

Erfindungsgemäße Getränke enthalten einen Anteil von wenigstens 40, vorzugsweise wenigstens 50 und insbesondere wenigstens 80 % Orangensaft.

Die Rekonstitution des konzentrierten Orangensaftes auf Trinkstärke erfolgt durch Zufügen von Wasser bis zum Erreichen eines Gesamtextraktgehaltes von wenigstens 116,8 g/l. Das zur Rekonstitution verwendete Wasser muß mindestens Trinkwasserqualität aufweisen, vorzugsweise wird entgastes Trinkwasser mit einer Leitfähigkeit von höchstens 400 µScm⁻¹, insbesondere höchstens 25 µScm⁻¹ und einem Sauerstoffgehalt von höchstens 0,5 mg/l, insbesondere von höchstens 0,2 mg/l verwendet.

Erfindungsgemäße Getränke mit einem Gehalt an 100 % Orangensaft weisen auch nach 12monatiger Lagerung bei ca. 20°C einen Gehalt an natürlichem Vitamin C von mindestens 300 mg/l, vorzugsweise mindestens 350 mg/l und insbesondere mindestens 380 mg/l auf.

Neben ihrem natürlichen, aus der Frucht stammenden Gehalt an Vitaminen und Mineralstoffen, können die erfindungsgemäßen Getränke mit ernährungsphysiologisch relevanten Mengen verschiedener Zusätze angereichert sein. In Frage kommen z.B. Zusätze an Vitaminen, z.B. B-Vitamine oder Vitamin E, Provitamine, z.B. Provitamin A, Mineralstoffzusätze, z.B. Calcium-, Magnesiumoder Eisensalze oder andere Zusätze, die einen Beitrag zu einer gesunden und ausgewogenen Ernährung leisten können.

Den erfindungsgemäßen Getränken können Süßungsmittel wie z.B. Saccharose, Fructose, Invertzuckersirup, Glucose oder Süßstoffe wie z.B. Aspartam, Acesulfam K, Saccharin, Cyclamat einzeln oder in Mischung zugesetzt werden. Zur Einstellung eines harmonischen Süße-Säure-Verhältnisses können den Getränken auch Fruchtsäuren, z.B. Citronensäure und Äpfelsäure oder Milchsäure zugesetzt werden.

Die erfindungsgemäßen Getränke können ebenfalls Zusätze von Orangenfruchtfleisch enthalten. Dabei handelt es sich um die mittels spezieller Drehsiebe bei der Herstellung von Orangensaft abgetrennten Fruchtfasern. Dieses gegebenenfalls von Kernen und Schalenbestandteilen befreite Fruchtfleisch wird in einem Röhrenerhitzer pasteurisiert, tiefgefroren und kann bei der Rekonstitution von Orangensaft aus konzentriertem Orangensaft zugesetzt werden. Der Zusatz kann 10-60 g/l, vorzugsweise 20-50 g/l betragen. Es sind jedoch auch niedrigere oder höhere Zusätze möglich. Das Orangenfruchtfleisch weist beispielsweise folgende Beschaffenheit auf:

| **Teilchengröße** | **Anteil in %** |
|---|---|
| > 10 mm | ca.1 |
| 5 - 10 mm | ca. 4 - 8 |
| 1 - 5 mm | ca. 25 - 30 |
| 0,3 - 1 mm | ca. 61-70 |

Ein erfindungsgemäßer Orangensaft kann dadurch hergestellt werden, daß ein in bekannter Wiese konzentrierter Orangensaft mit der für die gewünschte Trinkstärke erforderlichen Menge Wasser, vorzugsweise entgastes und entmineralisiertes Wasser, gemischt wird, mit einer Mischung aus konzentrierter und nicht-konzentrierter Wasserphase und einer Mischung aus konzentriertem und nicht-konzentriertem etherischen Öl und gegebenenfalls weiteren Zusätzen versetzt wird, worauf das erhaltene Gemisch auf 45-60°C, vorzugsweise 50-55°C erhitzt, unter Aromarückführung im Vakuum entgast wird, wobei das Aromakondensat kontinuierlich wieder in den Produktstrom eingespeist wird, unter kurzzeitiger Erhitzung pasteurisiert und entweder noch heiß in geeignete Gebinde, z.B. Flaschen, abgefüllt und nach Abfüllung auf Umgebungstemperatur abgekühlt wird, oder im Wärmeaustauscher auf Umgebungstemperatur abgekühlt und kaltsteril abgefüllt wird.

Die Herstellung erfolgt derart, daß die im Ernteland nach modernen Erkenntnissen unter schonenden Bedingungen hergestellten und bei Temperaturen von ca. -10°C gelagerten konzentrierten Orangensäfte, die vorzugsweise einen geringen bis höchstens 0,005 %vol Gehalt an etherischem Öl (bezogen auf den nur mit Wasser auf einen Gesamtextraktgehalt von mindestens 116,8 g/l eingestellten Saft) aufweisen, mit der für die gewünschte Trinkstärke erforderlichen Menge an entgastem, entmineralisiertem Wasser gemischt werden, die rezepturgemäße Mischung aus konzentrierter und nicht konzentrierter (= einfacher) Wasserphase und die Mischung aus konzentriertem und nicht konzentriertem (= einfachem) etherischem Öl sowie gegebenenfalls weitere Zusätze zugefügt werden. Das erhaltene Gemisch wird vorzugsweise auf 50 bis 55°C erhitzt, unter Aromarückführung im Vakuum (z.B. 120-150 mbar) entgast, wobei das Aromakondensat nach dem Injektorprinzip kontinuierlich wieder in den Produktstrom eingespeist wird. Im Anschluß an die nachfolgende, zur Pasteurisation erforderliche Kurzzeiterhitzung (z.B. 85 bis 90°C, Heißhaltezeit ca. 10 bis 15 Sekunden) wird der heiße Saft direkt zur Füllmaschine geleitet, in geeignete Gebinde, z.B. Flaschen abgefüllt und im Rückkühler auf Temperaturen von ca. 20°C abgekühlt. Erfindungsgemäße Getränke können auch kaltsteril abgefüllt werden, d.h. das zur Pasteurisation rasch hocherhitzte Produkt wird im Wärmeaustauscher auf ca. 20°C rückgekühlt und mit dieser Temperatur in sterile Gebinde abgefüllt.

Zur Bestimmung des Aromaverdünnungsfaktors (FD) und des Aromawerts der erfindungsgemäßen aromaaktiven Komponenten wird wie folgt verfahren:
a) Isolierung der flüchtigen Komponenten
   Um korrekte Werte für die aromaaktiven Komponenten zu erhalten, muß die Methode so schonend gewählt werden, daß nicht bei der Aufarbeitung gebundene Aromastoffe freigesetzt werden und ein erhöhter Wert an aromaaktiven Komponenten vorgetäuscht wird.
   Zur Isolierung der flüchtigen Komponenten werden 600 ml des Getränks mit 500 ml Diethylether während 6 Stunden in einem Rotationsperforator extrahiert, der Extrakt über Na₂SO₄ getrocknet und durch Abdestillieren des Lösungsmittels über eine Vigreux-Kolonne bei 38°C auf 100 ml eingeengt. Die flüchtige Fraktion wird anschließend durch Hochvakuumdestillation abgetrennt wobei die von Sen et al., J. Agric. Food Chem. 39, 757 (1991), beschriebene Apparatur verwendet wird. Unter Verwendung einer kleinen Vigreux-Kolonne wird das Destillat anschließend bei 38°C auf 400 µl konzentriert.
b) Arpmaextrakt-Verdünnungs-Analyse (AEDA)
   Die AEDA beginnt mit der Gaschromatographie-Olfaktometrie (GCO). Dazu wird der Originalextrakt (400 µl) aus 600 ml Getränk schrittweise mit Diethylether (1+1) verdünnt. Aliquote Teile (0,5 µl) jeder Verdünnung werden kapillargaschromatographisch getrennt und zur Ermittlung der Retentionszeiten von Aromastoffen wird der Trägergasstrom nach dem Verlassen der Kapillarsäule abgerochen. Das Verfahren wird solange fortgesetzt, bis kein Aromastoff mehr wahrgenommen werden kann. Auf diese Weise wird für jeden Aromastoff, der im Gaschromatogramm auftritt, ein Verdünnungsfaktor bestimmt. Die höchste Verdünnung, bei der eine Komponente errochen werden kann, wird als Aromaverdünnungsfaktor (FD-Faktor) definiert.
c) Anreicherung zur Identifizierung der Aromastoffe und
   Durchführung der Kapillar-Gaschromatographie (HRGC)/Olfaktometrie (HRGC/O) und HRGC/O/Massenspektrometrie (MS). 1 ml einer aus 1,8 1 des Getränkes erhaltenen Lösung der flüchtigen Aromastoffe wird in eine mit einer Aufschlämmung von Silicagel 60 in n-Pentan befüllte, mit Wasser auf 10-12°C gekühlte braune Glaskolonne gegeben und in 5 Fraktionen getrennt, wobei die folgenden n-Pentan/Diethylether-Mischungen verwendet werden: Fraktion I (100 ml; n-Pentan); Fraktion II (100 ml; 95+5 vol), Fraktion III (100 ml; 9+1 vol), Fraktion IV (100 ml; 8+2 vol) und Fraktion V (100 ml; 1+1 vol). Alle Fraktionen werden bei 38°C auf 100 µl konzentriert und mittels Kapillar-Gaschromatographie/Olfaktometrie die aromaaktiven Komponenten für die massenspektrometrische Untersuchung sichtbar gemacht.
   Zur gaschromatographischen Trennung werden Fused Silica-Kapillarsäulen verschiedener Polarität verwendet, z.B. eine FFAP (free fatty acid phase) von 30 m Länge, 0,32 mm Durchmesser und 0,25 µm Filmdicke, SE-54 (30 m x 0,32 mm und 0,25 µm) sowie OV-1701 (30 m x 32 mm, 0,25 µm). Die Proben werden mit der sogenannten "on column"-Injektionstechnik bei 35°C aufgebracht. Nach 2 Minuten wird die Temperatur mit 40°C/min auf 50°C (SE-54, OV 1701) bzw. 60°C (FFAP) erhöht, während 2 min gehalten, dann mit 6°C/min auf 180°C und schließlich mit 10°C/min auf 230°C erhöht und 10 min bei dieser Temperatur gehalten. Als Trägergas wird Helium mit einem Durchflußvolumen von 2,5 1/min verwendet. Am Kapillarende wird der Gasstrom geteilt und das Aroma der Komponenten erschnüffelt. Parallel erfolgt eine Flammen-Ionisations-Detektion der Aromastoffe. Die linearen Retentionswerte der Komponenten werden unter Benutzung eines Computer-Programms aus den Retentionszeiten der n-Alkane berechnet. Die Massenspektren werden bei 70 eV und 115 eV mit Isobutan als Reaktionsgas generiert.

Die Quantifizierung der Schlüsselaromastoffe erfolgt durch Isotopen-Verdünnungsanalyse mittels Massenspektrometrie, die durch den Zusatz einer bekannten Menge einer isotopenmarkierten Verbindung erlaubt, auf die unbekannte Menge des in seiner natürlichen Isotopenverteilung darin vorliegenden Stoffes zurückzurechnen. Der Aromawert einer aromaaktiven Komponente errechnet sich aus dem Verhältnis der für diese Substanz gemessenen Konzentration zu ihrem Geruchsschwellenwert.

Der Gehalt an gebundenen Aromastoffen wird durch Subtraktion der freien Aromastoffe vom Gesamtgehalt, d.h. der Summe aus freien und gebundenen Aromastoffen erhalten. Zur Bestimmung des Gesamtgehalts werden 200 ml Getränk mit 500 ml Pufferlösung auf einen pH-Wert von 4 bis 5 eingestellt. Nach Zugabe eines internen Standards erfolgt die Isolierung der flüchtigen Komponenten durch zweistündige simultane Destillation-Extraktion unter Verwendung von Pentan/Ether (1:1) als Lösungsmittel. Die kapillargaschromatographische Untersuchung wird ebenso durchgeführt wie bei der Bestimmung der aromaaktiven Komponenten beschrieben.

Die nachfolgenden Beispiele dienen der weiteren Erläuterung der Erfindung.

### Beispiel 1

Zur Herstellung von 10.000 Litern eines erfindungsgemäßen Getränkes mit einem Gesamtextraktgehalt von 120,1 g/l werden benötigt:

| | |
|---|---|
| Konzentrierter Orangensaft (64,5 % Gesamtextrakt, 4,3 % Gesamtsäure, berechnet als Citronensäure, 0,022 % (Gew./vol) etherisches Öl entsprechend 0,004 %vol bezogen auf den Gesamtextragehalt von 120,1 g/l) | 1.862 kg |
| Wasser (Leitfähigkeit 21 µScm⁻¹. Sauerstoffgehalt 0,1 mg/l) | 8.550 l |
| Wasserphase einfach | 20,0 l |
| Wasserphase konzentriert | 10,0 l |
| Ölphase einfach | 0,6 l |
| Ölphase konzentriert | 0,7 l |

Die fertige Mischung wurde wie beschrieben ausgemischt, entgast, pasteurisiert, mit einer Temperatur von ca. 88°C in 0,7 l Glasflaschen abgefüllt und im Rückkühler auf 20°C rückgekühlt.

Die sensorische Prüfung ergab, daß das erfindungsgemäße Getränk ein frisches, fruchtiges Aromaprofil aufwies, das dem eines frisch gepreßten Orangensafts vergleichbar war. Der zum Vergleich herangezogene frisch gepreßte Saft wurde mit einem Haushaltentsafter aus Orangen der gleichen Sorte, Erntezeitpunkt und Herkunft gewonnen.

Die in beiden Proben ermittelten Aromaverdünnungsfaktoren der erfindungsgemäßen aromaaktiven Substanzen und deren sensorische Bewertung sind in der folgenden Tabelle 1 einander gegenübergestellt.

**Tabelle 1**

| **Aromaaktive Komponente** | **sensorische Bewertung** | **Aromaverdünnungsfaktor (FD-Wert)** | |
|---|---|---|---|
| | | **Orangensaft nach vorliegender Erfindung** | **Orangensaft frisch gepreßt** |
| Ethylisobutanoat | grün, fruchtig | 256 | 128 |
| α-Pinen | Harz | 1024 | 64 |
| Ethylbutanoat | Apfel | 2048 | 1024 |
| Ethyl-2-methylbutanoat | fruchtig, süß | 1024 | 128 |
| Hexanal | Gras | 64 | 32 |
| Myrcen | Moos | 128 | 32 |
| Octanal | grün, Citrus | 512 | 64 |
| 2-Isopropyl-3-methoxy-pyrazin | grün, fettig | 512 | 32 |
| Isomere der 2- und 3-Methylbuttersäure | Schweiß | 128 | 4 |
| Vanillin | Vanille | 1024 | 32 |
| Nonanal | Citrus | 16 | 16 |
| Methional | gekochte Kartoffel | 64 | 64 |
| E,E-2,4-Decadienal | grün, fettig | 8 | 8 |
| β-Ionon | Veilchen | 16 | 16 |
| Weinlacton | würzig, süß | 256 | 256 |
| Ethylpropionat | grün, fruchtig | 16 | 32 |
| 1-Penten-3-on | scharf, etherisch | 16 | 8 |
| 2-/3-Methylbutanol | Malz | 32 | 64 |
| Ethyl-3-hydroxyhexanoat | fruchtig, süß | 8 | 64 |
| 4,5-Epoxy-E-2-decenal | Metall | 16 | 128 |
| Furaneol | Karamel | 16 | 32 |

Zur Ermittlung der Lagerstabilität wurde das gemäß Beispiel 1 hergestellte Getränk nach der Herstellung und nach 3, 6, 9 und 12 Monaten Lagerung bei 20°C sensorisch geprüft. Die Bewertung erfolgte im Vergleich zu einem herkömmlichen Orangensaft, der aus konzentriertem Orangensaft unter Hinzufügen von Wasser, nicht konzentrierter Wasserphase und nicht konzentrierter ölphase auf übliche Weise hergestellt und unter gleichen Bedingungen wie das erfindungsgemäße Getränk gelagert wurde. Dieser zum Vergleich herangezogene Standard-Orangensaft wies einen Gesamtextraktgehalt von 120,1 g/l, einen Gehalt an nicht konzentrierter Wasserphase von 0,5 %vol und einen Gehalt an nicht konzentriertem Öl von 0,018 %vol auf.

Die sensorische Prüfung wurde mittels einer speziellen Methode der beschreibenden sensorischen Prüfungen, der sogenannten Profilmethode durchgeführt, die im Detail zuerst von Cairncross und Sjöström 1950 beschrieben wurde (R. Neumann, P. Molnar: Sensorische Lebensmitteluntersuchung, Fachbuchverlag Leipzig, 1991). Das Ziel der Profilmethode besteht im allgemeinen darin, Geruch und Geschmack des zu analysierenden Produktes in seiner Komplexität mit allen Komponenten die bei der Mundprobe wahrnehmbar sind, darzustellen. Mit der sensorischen Profilmethode werden alle wahrnehmbaren Geruchs- und Geschmackskomponenten in der zeitlichen Reihenfolge ihrer Wahrnehmungen beschrieben. Gleichzeitig wird die Intensität jeder Komponente nach einer festgelegten und von den Prüfpersonen eingeprägten Intensitätsskala bestimmt.

Im vorliegenden Fall wurden in einem ersten Schritt die für die Bewertung relevanten Geruchs- und Geschmackseindrücke als Alterungston, fruchtig, Aromaintensität, duftig-aromatisch, herbmild, Frischsaftcharakter, frisch grün, Schalennote, Limonadenton und Kochnote festgelegt. Als zusätzlicher Geschmackseindruck wurde das Attribut "bitter" definiert. Für die quantitative Analyse wurde eine Intensitätsskala von 0 bis 10 verwendet.

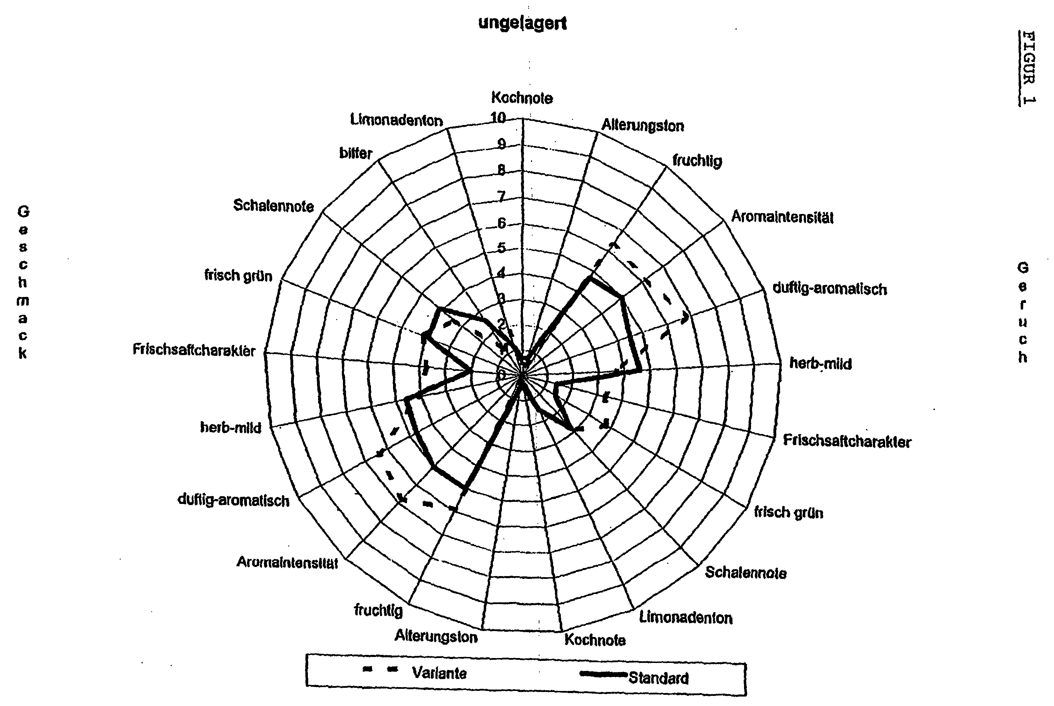

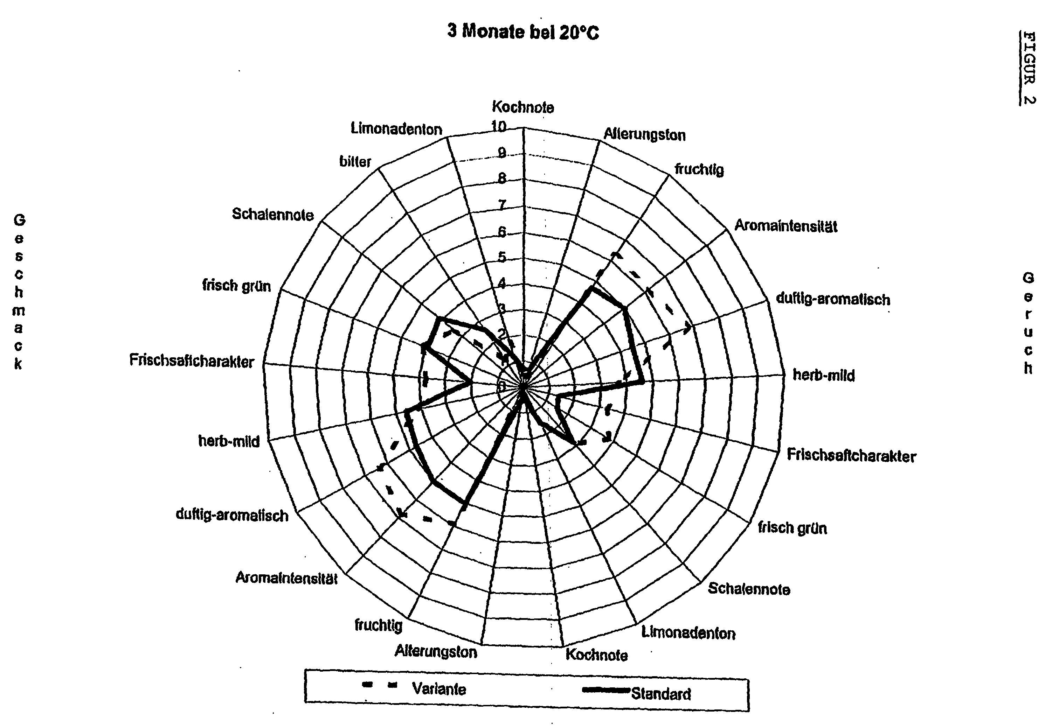

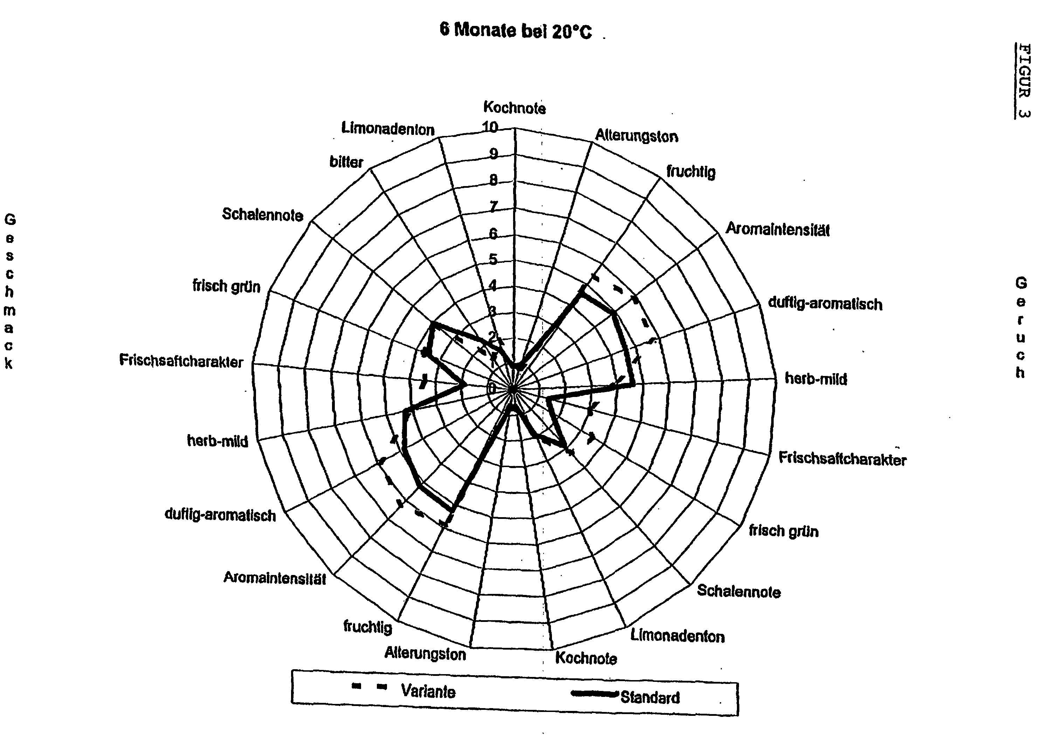

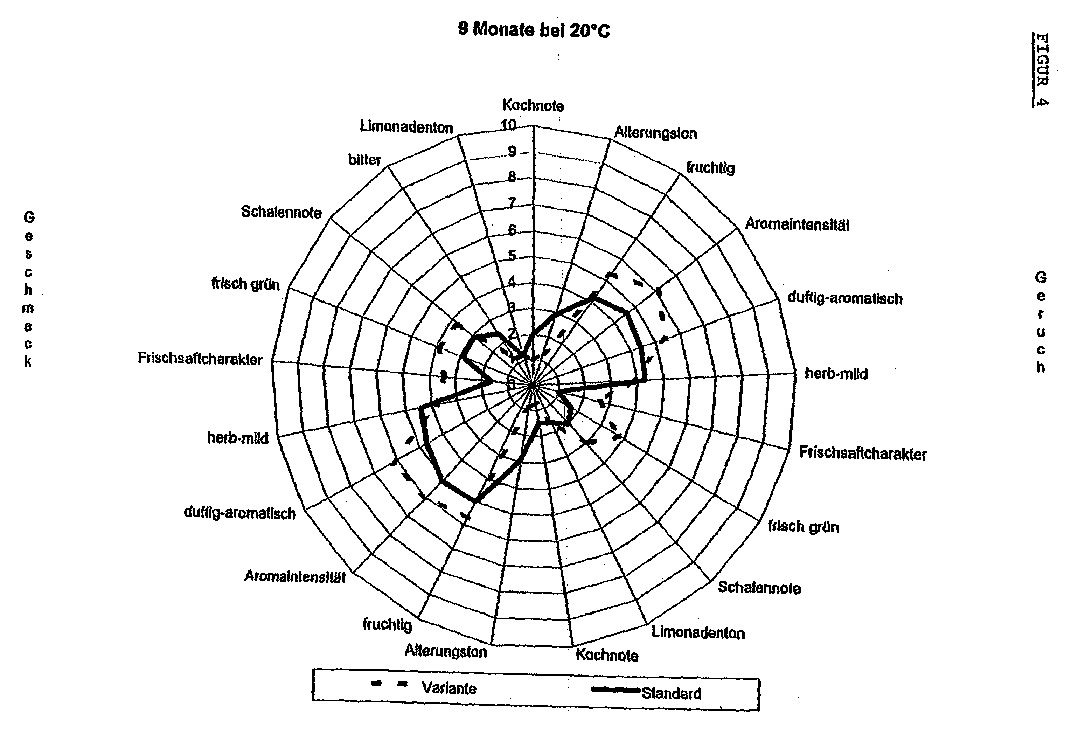

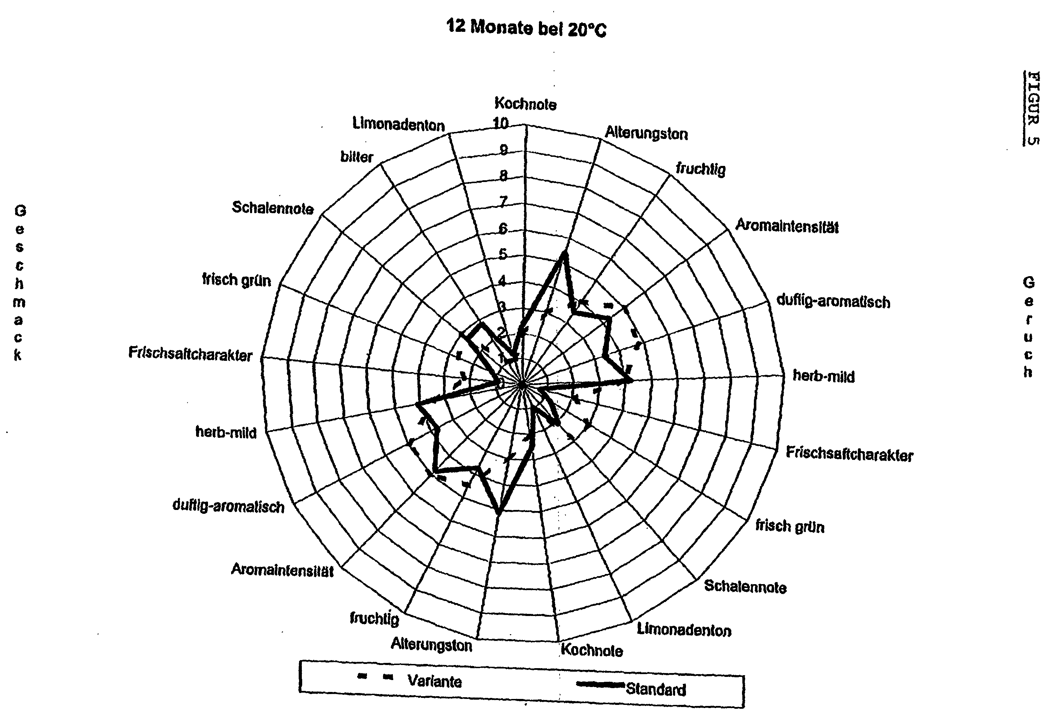

Das Testpanel bestand aus 10 geschulten Verkostern. Aus den jeweils ermittelten Einzelwerten wurden die arithmetischen Mittelwerte gebildet und das Verkostungsergebnis in den Figuren 1 bis 5 dargestellt. Das Ergebnis zeigt, daß der erfindungsgemäße Orangensaft im Vergleich zu herkömmlichem, mit Standard bezeichnetem Orangensaft eine deutlich verbesserte Lagerstabilität aufweist. Während bei herkömmlichen Orangensäften der Alterungston im Verlauf der Lagerung signifikant stärker ausgeprägt ist, nehmen Aromaintensität, Frischsaftcharakter und die als duftig-aromatisch und frisch grün charakterisierten Eigenschaften deutlich ab. Das erfindungsgemäße Getränk zeichnet sich hingegen auch nach mehrmonatiger Lagerung durch ein deutlich frischeres Aromaprofil und einen wesentlich geringeren Alterungston aus.

### Beispiel 2

In einem weiteren Versuch wurden 6.500 1 eines erfindungsgemäßen Orangensaftes mit einem Gesamtextraktgehalt von 123,4 g/l hergestellt. Dazu wurden verwendet:

| | |
|---|---|
| Konzentrierter Orangensaft (64,5 % Gesamtextrakt, 4,3 % Gesamtsäure, berechnet als Citronensäure, 0,022 % (Gew./vol) etherisches Öl entsprechend 0,004 %vol bezogen auf den Gesamtextraktgehalt von 120,1 g/l) | 1243,5 kg |
| Wasser (Leitfähigkeit 21 µScm⁻¹, Sauerstoffgehalt 0,1 mg/l) | 5.529,4 l |
| Wasserphase einfach | 9,75 l |
| Wasserphase konzentriert | 13,0 l |
| Ölphase einfach | 0,195 l |
| Ölphase konzentriert | 0,39 l |
| Schalenöl einfach | 0,195 l |

Das Getränk wurde wie oben beschrieben ausgemischt, pasteurisiert, mit einer Temperatur von 87-88°C in 0,5 1 Flaschen abgefüllt und auf 20°C zurückgekühlt. Die Proben wurden bei 20°C gelagert und in Abständen von jeweils 3 Monaten geprüft. Bei der Verkostung durch das Testpanel wurde ein dem nach Beispiel 1 hergestellten Getränk vergleichbares Aromaprofil und Lagerverhalten festgestellt.

### Beispiel 3

Wie in den Beispielen 1 und 2 beschrieben wurde ein Orangennektar mit einem Fruchtsaftgehalt von 60 % hergestellt. Für ein Liter des Getränks wurden 107,4 g konzentrierter Orangensaft, 76,1 g Invertzuckersirup, 862,5 ml entmineralisiertes, entgastes Wasser, 0,33 %vol einer Wasserphasen-Mischung bestehend aus 34% konzentrierter und 66 % nicht konzentrierter Wasserphase und 0,007 % vol einer Ölphasen-Mischung mit einem Gehalt an konzentriertem Öl von 71 % verwendet. Der zur Herstellung verwendete konzentrierte Orangensaft wies einen Gesamtextraktgehalt von 65,5% und einen als Citronensäure berechneten Gesamtsäuregehalt von 5,1% auf. Der Gehalt an freiem etherischem Öl betrug im konzentrierten Orangensaft 0,175 ml/kg entsprechend einem Gehalt von 0,002 %vol nach Verdünnen mit der vorgenannten Menge an Wasser und Invertzuckersirup. Der Invertzuckersirup wies einen Inversionsgrad von 0,67 und einen Trockensubstanzgehalt von 72,7 % auf.

### Beispiel 4

In einem weiteren Versuch wurde analog der in Beispiel 3 beschriebenen Rezeptur ein Orangennektar mit einem Fruchtgehalt von 60 % ausgemischt, dem jedoch als Süßungsmittel anstelle von Invertzuckersirup 0,24 g/l einer aus gleichen Teilen bestehenden Mischung der Süßstoffe Aspartam und Acesulfam K zugesetzt wurden. Der Zusatz von Wasser wurde auf 938 ml/l erhöht.

### Beispiel 5

Zur Herstellung eines erfindungsgemäßen Getränks bestehend aus 95,5 % Orangensaft und 4,5 % Orangenfruchtfleisch wurden pro Liter 187 g des im Beispiel 1 beschriebenen konzentrierten Orangensaftes, 46,9 g Orangenfruchtfleisch und 806,1 ml entmineralisiertes und entgastes Wasser benötigt. Dieser Mischung wurden 5,25 ml Wasserphase bestehend aus 47,6 % nicht konzentrierter Wasserphase und 52,4 % konzentrierter Wasserphase, sowie 0,09 ml einer Mischung aus 66,7 % konzentrierter Ölphase und 33,3 % nicht konzentrierter Ölphase zugefügt.

Zur Sicherstellung der gleichmäßigen Verteilung der Orangenfruchtfleischpartikel muß die Mischung bis zur Abfüllung ohne Unterbrechung gerührt werden, wobei das Einschlagen von Luft unbedingt zu vermeiden ist, um spätere Entmischungen bzw. Aufrahmungen des groben Fruchtfleischs nach der Abfüllung und während der Lagerung zu vermeiden.

Auch die in Beispielen 3 bis 5 beschriebenen Getränke wiesen nach der Herstellung und im Verlauf der Lagerung bei ca. 20°C ein deutlich frischeres Aromaprofil und eine verbesserte Lagerstabilität im Vergleich zu herkömmlichen Orangensäften und -nektaren auf.

## Patentansprüche

1. Verfahren zur Herstellung von Orangensaft durch Rekonstitution aus konzentriertem Orangensaft unter Zugabe der Wasserphase und etherischem Öl, wobei die Mengen an Wasserphase und etherischem Öl, das Verhältnis von konzentrierter zu nicht-konzentrierter Wasserphase und das Verhältnis von konzentriertem zu nicht-konzentriertem etherischen Öl so eingestellt werden, daß der Aromaverdünnungsfaktor (FD) der aromaaktiven Komponenten Ethylisobutanoat, α-Pinen, Ethylbutanoat, Ethyl-2-methylbutanoat, Hexanal, Myrcen, Octanal, 2-Isopropyl-3-methoxy-pyrazin, Isomere der 2- und 3-Methylbuttersäure und Vanillin im Vergleich zu frischgepreßtem Orangensaft erhöht ist und der Aromaverdünnungsfaktor (FD) der aromaaktiven Komponenten Nonanal, Methional, E,E-2,4-Decadienal, β-Ionon, Weinlacton, Ethylpropionat, 1-Penten-3-on, 2-/3-Methylbutanol, Ethyl-3-hydroxyhexanoat, 4,5-Epoxy-E-2-decenal und Furaneol etwa gleich groß oder niedriger ist als in frisch gepreßtem Orangensaft.

2. Verfahren nach Anspruch 1, **dadurch gekennzeichnet, daß** ein konzentrierter Orangensaft mit einem Gehalt an etherischem Öl von nicht über 0,005 %vol. (bezogen auf rückverdünnten Saft) eingesetzt wird.

3. Verfahren nach einem der vorhergehenden Ansprüche, **dadurch gekennzeichnet, daß** mindestens 10%, vorzugsweise mindestens 30%, des Gehalts an etherischem Öl in konzentrierter Form zugesetzt werden.

4. Verfahren nach einem der vorhergehenden Ansprüche, **dadurch gekennzeichnet, daß** das in konzentrierter Form zugesetzte etherische Öl einen wesentlichen Gehalt an Polymethoxyflavonen aufweist, wobei der Anteil an Tangeritin und Nobiletin bezogen auf den Gesamtgehalt an Polymethoxyflavonen zusammen mindestens 10%, vorzugsweise mindestens 20% beträgt.

5. Verfahren nach einem der vorhergehenden Ansprüche, **dadurch gekennzeichnet, daß** 5-95%, vorzugsweise mindestens 30% der Wasserphase in konzentrierter Form zugesetzt werden.

6. Verfahren nach einem der vorhergehenden Ansprüche, **dadurch gekennzeichnet, daß** ein in bekannter Weise konzentrierter Orangensaft mit der für die gewünschte Trinkstärke erforderlichen Menge Wasser, vorzugsweise entgasten und entmineralisierten Wasser, gemischt wird, mit einer Mischung aus konzentrierter und nicht-konzentrierter Wasserphase und einer Mischung aus konzentriertem und nicht-konzentriertem etherischen Öl und gegebenenfalls weiteren Zusätzen versetzt wird, worauf das erhaltene Gemisch auf 45-60°C, vorzugsweise 50-55°C erhitzt, unter Aromarückführung im Vakuum entgast wird, wobei das Aromakondensat kontinuierlich wieder in den Produktstrom eingespeist wird, unter kurzzeitiger Erhitzung pasteurisiert und entweder noch heiß in geeignete Gebinde, z.B. Flaschen, abgefüllt wird, oder im Wärmeaustauscher auf ca. 20°C abgekühlt und kaltsteril abgefüllt wird.

7. Verfahren nach einem der vorhergehenden Ansprüche, **dadurch gekennzeichnet, daß** dem Orangensaft während der Rekonstituierung Orangenfruchtfleisch zugesetzt wird.

8. Rekonstituierter Orangensaft, **gekennzeichnet durch** einen Gehalt von
a) 0,0025 - 0,050 %vol., vorzugsweise 0,01-0,025 %vol., insbesondere 0,012-0,018 %vol. an freiem etherischen Öl;
b) gegebenenfalls zusätzlich gebundenem etherischen Öl in einer Menge entsprechend der 0,1-20 fachen Menge an freiem etherischen Öl;
c) 0,025-1,0 %vol., vorzugsweise 0,05-0,6 %vol. freier Wasserphase;
d) zusätzlich gebundener Wasserphase in einer Menge entsprechend der 0,1-10 fachen Menge der freien Wasserphase.

9. Orangensaft gemäß Anspruch 8, **dadurch gekennzeichnet, daß** er zusätzlich grobes Orangenfruchtfleisch in einer Menge von 10-60 g/l, vorzugsweise 20-50 g/l enthält.

10. Orangensaft gemäß einem der Ansprüche 8 oder 9, **dadurch gekennzeichnet, daß**
a) der Gehalt an freien Aldehyden und Alkoholen mit einer Kettenlänge von 6 Kohlenstoffatomen 0,1-10 mg/l, vorzugsweise 0,4-4 mg/l,
b) der Gehalt an freien kurzkettigen Aldehyden mit einer Kettenlänge von 2 bis 5 Kohlenstoffatomen 1-50 mg/l, vorzugsweise 2-20 mg/l,
c) der Gehalt freien Estern mit einer Kettenlänge von 6-10 Kohlenstoffatomen im organischen Säurerest 0,05-5 mg/l, vorzugsweise 0,3-3 mg/l,
d) der Gehalt an freien Estern mit einer Kettenlänge von 2 bis 5 Kohlenstoffatomen im organischen Säurerest 0,2-10 mg/l, vorzugsweise 1-5 mg/l,
e) das Gewichtsverhältnis von freien Estern mit einer Kettenlänge von 2-10 Kohlenstoffatomen im organischen Säurerest zu dem Gehalt an freien Aldehyden und Alkoholen mit einer Kettenlänge von 6 Kohlenstoffatomen 1:1 bis 10:1, vorzugsweise 2:1 bis 6:1,
f) der Gehalt an Norisoprenoiden 0,001-1 mg/l,
g) der Gehalt an flüchtigen Schwefelverbindungen 0,001-5 mg/l,
h) der Gehalt an Valencen maximal 20 mg/l, vorzugsweise maximal 4 mg/l und
i) das Gewichtsverhältnis von Valencen zu Nootkaton 1:1 bis 30:1 beträgt.

11. Orangensaft nach einem der Ansprüche 8 bis 10, erhältlich nach dem Verfahren nach einem der Ansprüche 1 bis 7.

12. Orangensafthaltiges Getränk enthaltend wenigstens 40%, vorzugsweise wenigstens 50% und insbesondere wenigstens 80% vol. rekonstituierten Orangensaft nach einem der Ansprüche 8 bis 11.

## Claims

1. Process for the production of orange juice by reconstitution from concentrated orange juice under the addition of the aqueous phase and ethereal oil, in which the amounts of aqueous phase and ethereal oil, the ratio of concentrated to unconcentrated aqueous phase and the ratio of concentrated to unconcentrated ethereal oil are adjusted so that the flavour dilution factor (FD) of the flavour-active components ethyl isobutanoate, α-pinene, ethyl butanoate, ethyl-2-methylbutanoate, hexanal, myrcene, octanal, 2-isopropyl-3-methoxypyrazine, isomers of 2-methylbutyric acid and 3-methylbutyric acid and vanillin compared to freshly pressed orange juice is raised, and the flavour dilution factor (FD) of the flavour-active components nonanal, methional, E,E-2,4-decadienal, β-ionone, tatrolactone, ethyl propionate, 1-penten-3-one, 2-/3-methylbutanol, ethyl-3-hydroxyhexanoate, 4,5-epoxy-E-2-decenal and furaneol is roughly just as large or lower than in freshly pressed orange juice.

2. Process according to claim 1, **characterised in that** a concentrated orange juice with a content of ethereal oil of not more than 0.005 vol. % (referred to rediluted juice) is used.

3. Process according to one of the preceding claims, **characterised in that** at least 10%, preferably at least 30%, of the content of ethereal oil is added in concentrated form.

4. Process according to one of the preceding claims, **characterised in that** the ethereal oil added in concentrated form contains a substantial amount of polymethoxyflavones, the proportion of tangeritin and nobiletin referred to the total content of polymethoxyflavones together being at least 10%, preferably at least 20%.

5. Process according to one of the preceding claims, **characterised in that** 5-95%, preferably at least 30% of the aqueous phase is added in concentrated form.

6. Process according to one of the preceding claims, **characterised in that** an orange juice concentrated in a known manner is mixed with the necessary amount of water, preferably degassed and demineralised water, for the desired beverage strength, a mixture of concentrated and non-concentrated aqueous phase and a mixture of concentrated and non-concentrate ethereal oil and optionally further additives are added thereto, following which the resultant mixture is heated to 45°-60°C, preferably 50°-55°C, and is degassed in vacuo with recycling of the flavour component, wherein the flavour condensate is continuously re-fed into the product stream, is pasteurised by brief heating, and is either added while still hot to suitable receptacles, e.g. bottles, or is cooled to ca. 20°C in a heat exchanger and bottled cold under sterile conditions.

7. Process according to one of the preceding claims, **characterised in that** orange fruit pulp is added to the orange juice during the reconstitution.

8. Reconstituted orange juice, **characterised by** a content of
a) 0.0025-0.050 vol. %, preferably 0.01-0.025 vol. %, in particular 0.012-0.018 vol. %, of fresh ethereal oil;
b) optionally additionally bound ethereal oil in an amount corresponding to 0.1-20 times the amount of free ethereal oil;
c) 0.025-1.0 vol. %, preferably 0.05-0.6 vol. %, of free aqueous phase;
d) additionally bound aqueous phase in an amount corresponding to 0.1-10 times the amount of the free aqueous phase.

9. Orange juice according to claim 8, **characterised in that** it additionally contains coarse orange fruit pulp in an amount of 10-60 g/l, preferably 20-50 g/l.

10. Orange juice according to one of claims 8 and 9, **characterised in that**
a) the content of free aldehydes and alcohols with a chain length of 6 carbon atoms is 0.1-10 mg/l, preferably 0.4-4 mg/l,
b) the content of free short-chain aldehydes with a chain length of 2 to 5 carbon atoms is 1-50 mg/l, preferably 2-20 mg/l,
c) the content of free esters with a chain length of 6 to 10 carbon atoms in the organic acid residue is 0.05-5 mg/l, preferably 0.3-3 mg/l,
d) the content of free esters with a chain length of 2 to 5 carbon atoms in the organic acid radical is 0.2-10 mg/l, preferably 1-5 mg/l,
e) the weight ratio of free esters with a chain length of 2-10 carbon atoms in the organic acid radical to the content of free aldehydes and alcohols with a chain length of 6 carbon atoms is 1:1 to 10:1, preferably 2:1 to 6:1,
f) the content of norisoprenoids is 0.001-1 mg/l,
g) the content of volatile sulfur compounds is 0.001-5 mg/l,
h) the content of valencene is at most 20 mg/l, preferably at most 4 mg/l, and
i) the weight ratio of valencene to nootkatone is 1:1 to 30:1.

11. Orange juice according to one of claims 8 to 10, obtainable by the process according to one of claims 1 to 7.

12. Orange juice-containing beverage containing at least 40 vol. %, preferably at least 50 vol. % and in particular at least 80 vol. % of reconstituted orange juice according to one of claims 8 to 11.

## Revendications

1. Procédé de préparation de jus d'orange par reconstitution à partir de jus d'orange concentré, par addition de la phase aqueuse et d'huile essentielle, où les quantités de phase aqueuse et d'huile essentielle, la proportion de phase aqueuse concentrée à non concentrée et la proportion d'huile essentielle concentrée à non concentrée sont ajustées de manière que le facteur de dilution d'arôme (FD) des composants à activité aromatique d'isobutanoate d'éthyle, α -pinène, butanoate d'éthyle, 2-méthylbutanoate d'éthyle, hexanal, myrcène, octanal, 2-isopropyl-3-méthoxy-pyrazine, isomères des acides 2- et 3-méthylbutyrique et vanilline vis-à-vis du jus d'orange fraîchement pressé soit augmenté et que le facteur de dilution d'arôme (FD) des composants à activité aromatique de nonanal, méthional, E,E-2,4-décadiénal, β-ionone, lactone tartrique, propionate d'éthyle, 1-pentène-3-one, 2- et 3-méthylbutanol, 3-hydroxyhexanoate d'éthyle, 4,5-époxy-E-2-décénal et furanéol soit environ égal ou inférieur à celui du jus d'orange fraîchement pressé.

2. Procédé selon la revendication 1, **caractérisé en ce que** l'on met en oeuvre un jus d'orange concentré d'une teneur en huile essentielle non supérieure à 0,005% en volume (par rapport au jus redilué).

3. Procédé selon l'une des revendications qui précèdent, **caractérisé en ce que** l'on ajoute au moins 10%, de préférence au moins 30%, de la teneur en huile essentielle sous forme concentrée.

4. Procédé selon l'une des revendications qui précèdent, **caractérisé en ce que** l'huile essentielle ajoutée sous forme concentrée présente une teneur substantielle en polyméthoxyflavones, la fraction de tangéritine et de nobilétine par rapport à la teneur totale en polyméthoxyflavones étant au total d'au moins 10%, de préférence d'au moins 20%.

5. Procédé selon l'une des revendications qui précèdent, **caractérisé en ce que** l'on ajoute de 5 à 95%, de préférence au moins 30% de la phase aqueuse sous forme concentrée.

6. Procédé selon l'une des revendications qui précèdent, **caractérisé en ce que** le jus d'orange concentré de manière en soi connue est mélangé à la quantité d'eau nécessaire pour la consistance de boisson souhaitée, de préférence de l'eau dégazéifiée et déminéralisée, puis mélangé à un mélange de phase aqueuse concentrée et non concentrée et un mélange d'huile essentielle concentrée et non concentrée et éventuellement d'autres additifs, sur quoi le mélange obtenu est chauffé à 45 - 60°C, de préférence 50 - 55°C, dégazé sous vide avec recyclage des arômes, le condensat d'arômes étant réinjecté en continu dans le courant de produit, puis pasteurisé par bref chauffage et, soit conditionné encore chaud dans des récipients adéquats, par exemple des bouteilles, soit refroidi à environ 20°C dans un échangeur de chaleur et conditionné à l'état stérile à froid.

7. Procédé selon l'une des revendications qui précèdent, **caractérisé en ce que** l'on ajoute au jus d'orange de la pulpe d'orange pendant la reconstitution.

8. Jus d'orange reconstitué, **caractérisé par** une teneur de
a) 0,0025 - 0,050% en volume, de préférence 0,01 - 0,025% en volume, en particulier 0,012 - 0,018% en volume d'huile essentielle libre,
b) éventuellement, de l'huile essentielle combinée en une quantité correspondant à 0,1 - 20 fois la quantité d'huile essentielle libre,
c) 0,025 - 1,0% en volume, de préférence 0,05 - 0,6% en volume de phase aqueuse libre,
d) une phase aqueuse combinée additionnelle en une quantité correspondant à 0,1 - 10 fois la quantité de phase aqueuse libre.

9. Jus d'orange selon la revendication 8, **caractérisée en ce qu'**il contient en outre de la pulpe d'orange brute en une quantité de 10 - 60 g/l, de préférence de 20 - 50 g/l.

10. Jus d'orange selon l'une des revendications 8 ou 9, **caractérisé en ce que**
a) la teneur en alcools et aldéhydes libres d'une longueur de chaîne de 6 atomes de carbone est de 0,1 à 10 mg/l, de préférence de 0,4 à 4 mg/l,
b) la teneur en aldéhydes à chaîne courte libres, d'une longueur de chaîne de 2 à 5 atomes de carbone, est de 1 à 50 mg/l, de préférence de 2 à 20 mg/l,
c) la teneur en esters libres d'une longueur de chaîne de 6 à 10 atomes de carbone dans le radical acide organique est de 0,05 à 5 mg/l, de préférence de 0,3 à 3 mg/l,
d) la teneur en esters libres d'une longueur de chaîne de 2 à 5 atomes de carbone dans le radical acide organique est de 0,2 à 10 mg/l, de préférence de 1 à 5 mg/l,
e) le rapport pondéral d'esters libres d'une longueur de chaîne de 2 à 10 atomes de carbone dans le radical acide organique à la teneur en alcools et aldéhydes libres d'une longueur de chaîne de 6 atomes de carbone est de 1 : 1 à 10 : 1, de préférence de 2 : 1 à 6 : 1,
f) la teneur en norisoprénoïdes est de 0,001 à 1 mg/l,
g) la teneur en composés volatils de soufre est de 0,001 à 5 mg/l,
h) la teneur en valencène est au maximum de 20 mg/l, de préférence au maximum de 4 mg/l et
i) le rapport pondéral du valencène à la nootkatone est de 1 : 1 à 30 : 1.

11. Jus d'orange selon l'une des revendications 8 à 10, que l'on peut obtenir par le procédé selon l'une des revendications 1 à 7.

12. Boissons contenant du jus d'orange, contenant au moins 40%, de préférence au moins 50% et en particulier au moins 80% en volume de jus d'orange reconstitué selon l'une des revendications 8 à 11.
